Europäisches Patentamt

European Patent Office

Office européen des brevets

(11) Publication number: **0 026 247**
**B1**

(12) **EUROPEAN PATENT SPECIFICATION**

(45) Date of publication of patent specification: **19.12.84**

(21) Application number: **79302021.5**

(22) Date of filing: **28.09.79**

(51) Int. Cl.³: **A 61 F 11/00,** A 63 B 71/08,
B 29 C 1/02

(54) Method of making an ear insert and ear insert made by this method.

(43) Date of publication of application:
**08.04.81 Bulletin 81/14**

(45) Publication of the grant of the patent:
**19.12.84 Bulletin 84/51**

(84) Designated Contracting States:
**AT BE CH DE FR IT LU NL SE**

(56) References cited:
**DE-A-2 114 946**
**DE-A-2 147 936**
**DE-C-1 071 892**
**DE-U-1 810 434**
**DE-U-1 948 502**
**FR-A-1 220 123**
**FR-A-2 276 071**
**US-A-1 755 775**
**US-A-3 107 668**
**US-A-3 649 152**
**US-A-3 703 572**

(73) Proprietor: **Carr, Peter Joseph**
**20 Links Walk**
**Port Seton East Lothian Scotland (GB)**

(72) Inventor: **Carr, Peter Joseph**
**20 Links Walk**
**Port Seton East Lothian Scotland (GB)**

(74) Representative: **Newby, John Ross et al**
**J.Y. & G.W. Johnson Furnival House 14/18 High**
**Holborn**
**London WC1V 6DE (GB)**

Courier Press, Leamington Spa, England.

## Description

This invention relates to a method of making an ear insert which accurately reproduces and conforms closely to an ear cavity, comprising taking an impression of the ear cavity with an impressioning material, using the impression to form a mould cavity in a mould, introducing moulding material into the mould cavity and optionally removing from the mould cavity the moulding material when it has solidified. The invention also relates to an ear insert made by such a method.

Ear inserts for use in deaf aids or for other specialised applications, e.g. for speech training, are currently usually made by a method which is time-consuming and of whose products only about 80% are normally satisfactorily useful for the intended purpose.

This known method involves forming an impression of an ear canal and dipping the impression into molten wax to form a wax coating on the surface of the impression. The purpose of the wax coating is to compensate for removal of material from a moulded insert by polishing which, as mentioned later, it is necessary to carry out after the moulding operation. The wax-coated impression is inserted into a body of soft plaster of Paris contained in the lower half of a two-part flask, the lower half of the flask and plaster when set forming the lower half of a two-part plaster mould. After the plaster has set its upper surface is coated with a separator solution containing a material for facilitating separation of the two mould parts when they are subsequently placed together in contact. When the separator solution has dried, the upper half of the flask is filled with soft plaster of Paris and the two flask parts brought and held together. After the plaster in the upper flask part has set hard, the two flask parts are separated and the impression is removed. An acrylic moulding material is then introduced into the resulting cavity after wax has been removed and the cavity treated with separator solution and allowed to dry. The two parts of the flask are then brought and secured together and the flask is pressurised for ten to fifteen minutes and the acrylic material cured for from 2 to 3 hours whilst the flask is retained in a clamp. The moulded insert is then removed, trimmed and polished, considerable polishing being required due to the rough surface of the insert occasioned by the comparatively rough finish of the plaster mould cavity.

Although removal of material by the polishing is compensated for by the wax coating on the impression initially used, the wax coating is in practice never evenly distributed over the surface of the impression. This variation in the thickness of the wax coating, together with inevitable variations in the degree of polishing as dictated by surface roughness variations between one moulded insert and another, mean that in a certain proportion of products the insert does not form a snug fit when placed in a human ear canal. If the insert does not form a snug fit in the ear canal acoustic feedback may occur in use, making the insert unsatisfactory.

Another known method of making an ear insert is described in DE—C—1071892. This known method involves forming an impression of an ear cavity from hardenable plastics material, electroplating a metal shell on the impression, and replacing the impression material with a filler material. However this method of producing an ear insert is far from ideal for a number of reasons. Firstly the metal shell may be an irritant to the wearer. Secondly any surface roughness or imperfections in the impression are reproduced in the electroplating step. (In practice the surface of the impression will always be slightly rough due to irregularities, e.g. pores, hairs, in the skin defining the ear cavity.) Finally it is difficult to modify the shape of the finished ear insert if required during final fitting of the ear insert in a wearer's ear.

It is also known in non-medical applications to mould articles using a vacuum forming technique to manufacture the mould. For example in US—A—3703572 there is disclosed a method of casting a relatively shallow article by conforming, by vacuum suction, a sheet of thermoplastics material to a pre-formed pattern, the thermoplastics material being permanently deformed to define a mould cavity, and thereafter pouring a casting material into the mould cavity so formed to produce the moulded article. However this known moulding technique involves a completely different technical field to the present invention. The pattern is not made by impressioning techniques but is manufactured to have surfaces free from any imperfections. It is also necessary to drill holes through the pattern to effect the vacuum suction of the thermoplastics sheet. In practice this would result in the thermoplastics material being drawn into these holes during the vacuum suction causing a plurality of holes to be formed in the conformed sheet producing a plurality of projections in the finished article. This is not important in the prior art method since these projections do not project from a complex structure but project from flat surfaces of the finished article and can therefore be easily removed.

The present invention seeks to provide a relatively simple and economic method of making an ear insert which accurately reproduces the shape of the ear cavity into which the ear insert is to be inserted and which requires little or no polishing to remove rough surfaces formed during moulding of the ear insert. This is achieved, according to the invention, by forming the mould cavity by placing the ear cavity impression on a gas permeable support, positioning a thermo-softened sheet of thermoplastics material over the impression and applying suction through the gas permeable support to accurately conform the thermo-softened sheet to the shape of the impression, allowing the sheet of thermoplastics material to harden and separating the impression from the sheet of thermoplastics material without permanently disturbing the shape into which said sheet has been conformed to leave the mould cavity in the sheet material.

The mould cavity produced in the sheet material is an almost exact replica of the impression and has a comparatively smooth surface finish. This means that the resulting moulded ear insert has a surface finish requiring little or no polishing and can be fitted snugly into the patient's ear canal. Furthermore the mould cavity and ear insert formed therefrom can be produced economically and relatively quickly.

The pressure deformable sheet may be made of a toxic material or a non-toxic material. However it is preferred that the sheet is made of a non-toxic material which does not arouse an allergic response in humans. Non-toxic materials are preferred since with patients allergic to certain moulding materials, e.g. acrylic materials, the deformed sheet material can be used as a protective skin over an insert made of less costly, but allergenic material, e.g. acrylic material. Examples of non-toxic, non-allergenic materials of which the sheet may be made are polycarbonates, polystyrene, perspex and a silicone rubber.

The impression may be a solid impression and the material of which the impression is made may be any one of a variety of materials known in the art for this purpose. For example, the material used to make the impression may be alginate, rubberized silicone, plaster (e.g. plaster of Paris), plasticine, wax, "Paribar", or stone.

Alternatively, the impression may be formed by pressure deforming a sheet of pressure deformable material, e.g. plastics material, into the ear cavity.

The moulding material introduced into the cavity vacated by the impression will normally be a plastics material, conveniently an acrylic material (e.g. methyl methacrylate), a polycarbonate, a silicone rubber or materials which set hard when mixed together. However, any other self-curing moulding material may be used. The solidified moulding material is preferably a soft or semi-soft material, although the insert may be made out of a hard material, or a combination of hard, soft or semi-hard material.

The moulding material may be clear or coloured, e.g. pink, and may also include a further colorant, for example a pulverized blood red, blue or pink coloured rayon flock.

Included within the scope of the invention is a method of making a mould for use in making an ear insert, such mould being useful alternatively as a protective skin as referred to earlier or as an impression as just mentioned. The method comprises the pressure-deforming step referred to earlier followed by separation of the impression from the sheet of material without permanently disturbing the shape into which the sheet of plastics material has been formed by said deformation.

In the methods according to the invention of making an ear insert and of making a mould for use in making an ear insert, formation of the mould cavity may be accomplished by placing the ear cavity impression on a plate having openings, e.g. perforations or slits, therethrough, disposing a sheet of thermoplastics material above the impression, applying heat to the sheet of thermoplastics material to thermosoften it, lowering the sheet of plastics material onto the impression and applying a suction to the lowered sheet of plastics material through the openings in the plate so as to effect suction-drawing of the sheet of thermoplastics material over the impression so as to conform the sheet to the shape of the impression.

The sheet of thermoplastics material may be heated in any convenient way, e.g. by means of a heating element disposed above the sheet of plastics material, or even by means of a naked flame.

The sheet of plastics material may be manually lowered over the impression. However preferably the sheet is retained in a frame, for example by use of a screw clamp, mounted so as to enable the necessary lowering of the sheet of plastics material onto the impression.

Apparatus of any of the kinds just referred to are to be understood to be included within the scope of the invention.

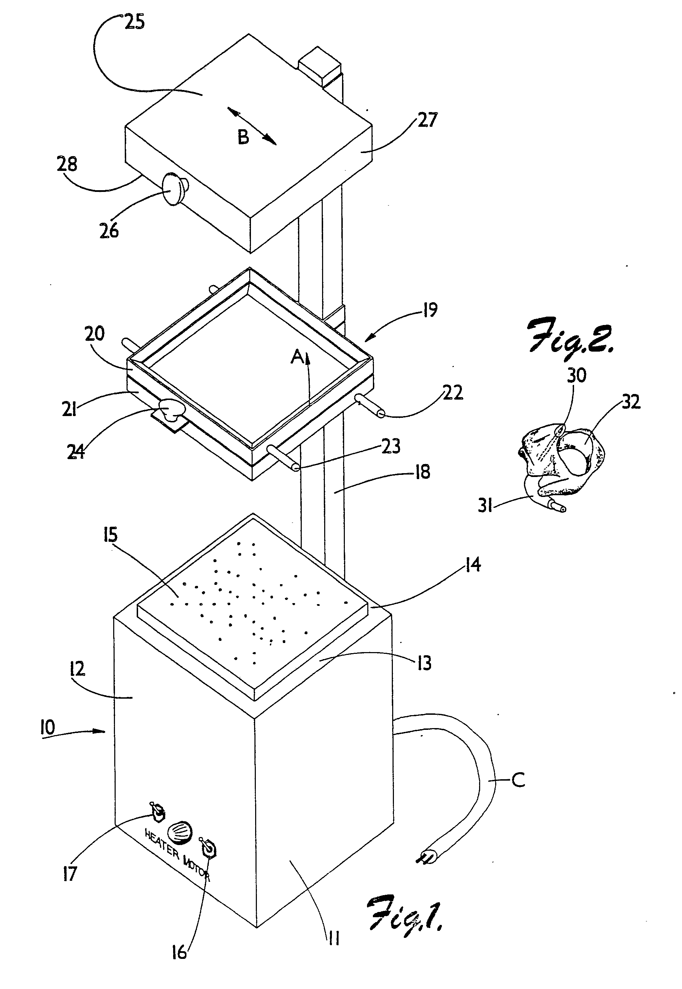

A particular form of apparatus suitable for carrying out a process in accordance with the invention will now be described, by way of example, with reference to the accompanying drawing, Figure 1 of which shows the apparatus in perspective, and Figure 2 of which shows a completed ear insert made in accordance with the invention.

The apparatus shown in the Figure 1 comprises an electric motor driven fan assembly 10 having a motor housing 11, a fan housing 12 and an end plate 13 which is formed with upwardly extending walls 14 defining a rectangular aperture which serves as an air inlet and across which is disposed a perforated plate 15. A cable C for connection of the motor of the fan assembly 10 to a source of electric current (not shown) enters the motor housing 11 through an aperture provided for the purpose. Two toggle switches 16 and 17 are mounted in apertures provided on the front of the motor housing 11, switch 16 being provided on and off of the electric motor and switch 17 being provided for switching on and off of a heater the purpose of which is mentioned below.

A track 18 is secured to the rear of the motor housing 11 and extends vertically to a point some distance above the perforated plate 15.

A frame 19 is mounted by means (not shown) for vertical movement on the track 18 and means (also not shown) are provided to enable the frame 19 to be secured in fixed position on the track 18.

The frame 19 comprises an upper frame member 20 and a lower frame member 21, the two being hinged together by conventional hinges (not shown) provided between opposing faces of each frame member 20, 21, at the lefthand side (as viewed in Figure 1) of the frame 19 so that the two frame members can be parted by movement in the direction shown by the arrow A. Two handles 22 and 23 are provided on the right-hand side (as viewed in Figure 1) of the frame 19 to assist in parting the two frame members 20 and 21. A conventional screw clamp 24 is provided on the front of the frame 19 to secure the two frame members together in use.

A heater assembly 25 is secured to an upper part of the track 18 above the frame 19. The heater assembly 25 is mounted so as to be vertically fixed but so as to be movable from side-to-side (in the directions of the arrows B) to enable easy access to the frame 19. A knob 26 is provided on the front of the heater assembly 25 to assist in such side-to-side movement.

The heater assembly 25 comprises a parallelepipedic housing 27 closed on its four sides and its top but open at its base 28. Housed in the housing 27 is an electrical resistance heating element (not shown) connected to a source of electrical current (not shown) through the switch 17 by means of electrical wiring concealed by the track 18 in the view shown.

Use of the apparatus just described for making a mould for use in making an ear insert will now be described.

The frame 19 is moved to its lowest position on the track 18, in which position the track 19 is supported by the top of the fan assembly 10, and the heater assembly 25 is moved to one side. Using the handles 22 and 23, after unfastening the clamp 24, the two frame members 20 and 21 of the frame 19 are parted and a sheet of plastics film is placed on the upper surface of the lower frame member 21. The two frame members 20 and 21 are then brought together and secured by means of the clamp 24 and the heater assembly is moved back to its previous position.

An impression or a number of impressions are then placed on the upper surface of the perforated plate 15 of the fan assembly 25, after raising the frame 19 to, and securing it at, a desired position a short distance below the heater assembly 25. The heater assembly, supplied with current by earlier operation of the switch 17, is then allowed to heat-soften the plastics film in the frame 19.

When softened to the desired degree, the motor of the fan assembly 10 is switched on and the frame 19 is lowered to its maximum extent on the track 18 in which position the lower frame member 20 is sealingly engaged over the air inlet 14 of the fan assembly 10.

The suction of the fan of the fan assembly causes the heat softened plastics film in the frame 19 to be drawn down over the impression(s) on the perforated plate 15 and to be deformed to their shape. When so deformed and the film has cooled, the frame 19 is raised, the heater assembly 25 moved to one side, the fan motor switched off, the frame 19 opened and the film removed from the frame 19 together with the impressions which are temporarily retained by the film. The impressions are then pressed out manually leaving cavities in the film which accurately reproduce the shape(s) of the impression(s).

Manufacture of an ear insert by a process according to the invention will now be described, by way of example only.

Example

An impression of the ear canal of a patient was formed by direct moulding in the patient's ear using a proprietary rubbery material well-known for use for this purpose (e.g. "Pannasil A"). Four further identical impressions were taken from the same patient, the five impressions then being placed on the perforated plate 15 of the apparatus shown in the accompanying drawing.

The heater assembly 25 of the apparatus was then switched on for 10 minutes. A sheet of polycarbonate resin (0.060 mm thick) was then fixed in the frame member 21 and the sheet brought up to the pre-heated assembly 25. After approximately 3 minutes, the polycarbonate sheet was sufficiently thermo-softened, sagging at its middle by an amount of approximately 1.25 cm.

The frame 19 was then lowered onto the perforated plate 15 to bring the thermo-softened sheet into contact with the impressions. Vacuum drawing resulted causing the sheet of plastics material to be drawn down tightly over the impressions accurately conforming to the shape of each.

The frame and sheet were retained in this lowered position and the vacuum applied for a few seconds until the sheet of polycarbonate resin had set. The frame 19 was then raised, the deformed sheet was removed from the apparatus and each impression pressed out of the vacuum-formed sheet of polycarbonate resin to leave five mould cavities.

One of the so-formed cavities was cut from the sheet to form a mould which was then filled with a self-curing acrylic resin, e.g. "Duro" (Trade Mark of Eden Vale Laboratories) self curing denture base acrylic material. A piece of wire which retained its shape when bent was then inserted into a tube. The wire and tube were then bent to conform to a desired configuration and were then inserted vertically into the resin until they reached the base of the cavity. A tubular plastics barb was then threaded onto the upper end of the wire so as to be partially embedded in the resin. The purpose of these measures is to provide in the finished insert a metal passage (when the wire or wire and tube are subsequently removed) and a barb, connected to the passage, to the projecting end of which barb can be connected a tube for connection to the acoustic output of a hearing aid. The mould was then placed in a warm glycerine bath maintained at approximately body temperature and a suitable pressure, typically 3.5 kg/cm² (gauge), applied. The mould was left to cure in this condition for at least 5 minutes, e.g. 10 minutes, and then the cured acrylic resin material was manually removed from the mould.

The resulting moulded insert was found to be highly polished and needed no trimming or further polishing on the surfaces which, in use, contact the ear. The flat surface not in contact with the polycarbonate sheet when insert is in the mould was polished by means conventional in the art. The ear insert was found to fit snugly in the patient's ear and in use not to give rise to any acoustic feedback. It was also found that, to avoid any possible allergenic response from the patient, the patient's ear could be protected from contact with the ear insert by first placing the ear insert back in one of the moulds produced by the suction-forming operation, and it was found that when used in this manner the ear insert was equally satisfactory, still providing a snug fit and resulting in no acoustic feedback.

Figure 2 shows the completed insert. The ear-contacting surface being uppermost, the meatal passage is indicated at 30 and the tubular barb at 31. The aperture 32 is formed to reduce the overall weight of the insert and is normally formed by cutting-away a central part of the impression before it has been moulded. Alternatively the aperture 32 may be cut out after the ear insert has been moulded, or a former can be placed in the mould cavity prior to moulding.

In other embodiments of the invention the pressure deformable sheet of material may be deformed over the impression of the ear canal by the application of an over pressure instead of by the application of a suction. Furthermore the ear insert could be drilled after moulding to provide the meatal passage or to enable tubing and/or a tubular barb to be glued into the drilled passage. However it should be realised that it is preferred to mould as opposed to drilling the meatal passage since the meatal passage can be moulded to change directions by gently curving the passage. If the meatal passage is drilled a change of direction can only be made by drilling bores from two different directions, the two drilled bores meeting at an angle. It will of course be appreciated that a gently curving· meatal passage is preferred acoustically to an angled meatal passage.

The suction generated by the electric motor driven fan assembly 10 for vacuum-drawing the pressure deformable sheet over the impressions could be generated instead by other means. For example if a straight main tube was provided having a branch tube extending at right angles to the main tube, sufficient suction could be generated at the outlet of the branch tube by running tap water through the main tube at a sufficient pressure, e.g. 3 kg/cm² (gauge).

Finally it should be realised that any form of ear insert may be moulded, e.g. solid, shell or skeleton. The insert may be moulded from different materials to have a soft tip or tips with the rest of the material moulded from harder material. Alternatively the insert may be moulded completely from soft, semi-soft or semi-hard material. In addition the solidified moulding material may be retained in the mould cavity formed in the sheet material to act as a protective packaging or as a covering, e.g. a non-allergenic covering, in use of the insert.

**Claims**

1. A method of making an ear insert which accurately reproduces and conforms closely to an ear cavity, comprising taking an impression of the ear cavity with an impressioning material, using the impression to form a mould cavity in a mould, introducing moulding material into the mould cavity and optionally removing from the mould cavity the moulding material when it has solidified, characterised in that the mould cavity is formed by placing the ear cavity impression on a gas permeable support, positioning a thermo-softened sheet of thermoplastics material over the impression and applying suction through the gas permeable support to accurately conform the thermo-softened sheet to the shape of the impression, allowing the sheet of thermoplastics material to harden and separating the impression from the sheet of thermoplastics material without permanently disturbing the shape into which said sheet has been conformed to leave the mould cavity in the sheet material.

2. A method as claimed in claim 1, characterised in that the sheet of thermoplastics material is non-toxic and does not arouse an allergic response in humans.

3. A method as claimed in claim 1 or 2, characterised in that the moulding material introduced into the cavity vacated by the impression is an acrylic plastics material, a polycarbonate or a silicone rubber.

4. A method as claimed in any preceding claim, characterised in that prior to conforming the sheet of thermoplastics material to the shape of the impression the sheet of thermoplastics material is disposed in a position spaced above the impression, whereafter heat is applied to the sheet to thermo-soften it and the sheet is then lowered over the impression to be conformed to the shape thereof.

5. A method as claimed in claim 4, characterised in that the sheet of thermoplastics material is heated by means of a heating element (25) disposed above the sheet of thermoplastics material.

6. A method as claimed in claim 4 or 5, characterised in that the sheet of thermoplastics material is retained in a frame (19) mounted so as to enable the lowering of the sheet of plastics material onto the impression.

7. A method as claimed in any preceding claim, characterised in that a tube (31), for use in connection of the resulting ear insert to the acoustic output of a hearing aid in use of the ear insert and hearing aid in combination, is inserted into the mould cavity prior to solidification of the moulding material.

8. A method as claimed in any preceding claim, wherein the moulding material is removed from the mould cavity when it has solidified, and is used as an impression to form a mould cavity in another mould.

9. An ear insert when made by the method claimed in any preceding claim and in which the solidified moulding material is retained in the mould cavity formed in said sheet of thermoplastics material.

10. An ear insert when made by the method claimed in any one of claims 1 to 8 and in which the solidified moulding material has been removed from the said mould cavity.

## Patentansprüche

1. Eine Methode zur Herstellung eines Ohreinsatzes, der eine präzise Nachbildung für und eine paßgerechte Übereinstimmung mit einer Ohrmuschel ermöglicht, einschließlich der Herstellung eines Abdrucks der Ohrmuschel mit Hilfe eines Abdruckmaterials, wobei der Abdruck zur Herstellung eines Formenhohlraums in einem Formwerkzeug dient, einschließlich der Eingabe von Formmasse in den Formenhohlraum und wahlweiser Entnahme der erstarrten Formmasse aus dem Formenhohlraum, dadurch gekennzeichnet, daß der Formenhohlraum dadurch entsteht, daß der Ohrmuschelabdruck auf eine gasdurchlässige Halterung aufgebracht, eine durch Wärme plastifizierte Folie aus thermoplastischem Material über den Abdruck gelegt und durch die gasdurchlässige Halterung ein Unterdruck angelegt wird, um die durch Wärme plastifizierte Folie der Gestalt des Abdrucks präzise anzupassen, einschließlich Erstarren der Folie aus thermoplastischem Material und Trennung des Abdrucks von der Folie aus thermoplastischem Material ohne dauerhafte Veränderung der Gestalt, in die die Folie in Anpassung an die Form des Formenhohlraums umgeformt wurde.

2. Eine Methode gemäß Anspruch 1, dadurch gekennzeichnet, daß die Folie aus thermoplastischem Material physiologisch unbedenklich ist und beim Menschen keine allergischen Reaktionen hervorruft.

3. Eine Methode gemäß Anspruch 1 oder 2, dadurch gekennzeichnet, daß es sich bei der Formmasse, die in den von dem Abdruck hinterlassenen Formenhohlraum eingegeben wird, um einen Acrylharzkunststoff, ein Polycarbonat oder einen Silikonkautschuk handelt.

4. Eine Methode gemäß irgendeinem der vorgenannten Ansprüche, dadurch gekennzeichnet, daß die Folie aus thermoplastischem Material von ihrer Umformung in die Gestalt des Abdrucks in eine Position oberhalb des Abdrucks gebracht, anschließend die Folie durch Wärmeeinwirkung plastifiziert und die Folie dann so über den Abdruck abgesenkt wird, daß sie dessen Gestalt annimmt.

5. Eine Methode gemäß Anspruch 4, dadurch gekennzeichnet, daß die Folie aus thermoplastischem Material mit Hilfe eines oberhalb der Folie aus thermoplastischem Material angeordneten Heizelementes (25) erwärmt wird.

6. Eine Methode gemäß Anspruch 4 oder 5, dadurch gekennzeichnet, daß die Folie aus thermoplastischem Material von einem Rahmen (19) gehalten wird, der so montiert ist, daß die Folie aus thermoplastischem Material auf den Abdruck abgesenkt werden kann.

7. Eine Methode gemäß irgendeinem der vorgenannten Ansprüche, dadurch gekennzeichnet, daß ein Röhrchen (31) zum Anschluß des entstehenden Ohreinsatzes an den akustischen Ausgang eines Hörgerätes — bei Benutzung des Ohreinsatzes in Kombination mit einem Hörgerät — vor dem Erstarren der Formmasse in den Formenhohlraum eingesetzt wird.

8. Eine Methode gemäß irgendeinem der vorgenannten Ansprüche, wobei die Formmasse nach ihrem Erstarren dem Formenhohlraum entnommen und als Abdruck zur Bildung eines Formenhohlraums in einer anderen Form verwendet wird.

9. Ein Ohreinsatz, hergestellt nach der gemäß irgendeinem der vorgenannten Ansprüche beanspruchten Methode, wobei die erstarrte Formmasse in dem in der genannten Folie aus thermoplastischem Material gebildeten Formenhohlraum belassen wird.

10. Ein Ohreinsatz, hergestellt nach der gemäß irgendeinem der Ansprüche 1 bis 8 beanspruchten Methode, wobei die erstarrte Formmasse dem genannten Formenhohlraum entnommen wird.

## Revendications

1. Procédé pour fabriquer un embout auriculaire, qui reproduit et épouse avec précision la forme d'une cavité auriculaire, suivant lequel on prend une empreinte de la cavité auriculaire à l'aide d'une matière pour empreintes, on utilise l'empreinte pour former une cavité de moulage dans un moule, on introduit la matière de moulage dans la cavité du moule et on retire éventuellement de la cavité du moule, la matière de moulage lorsqu'elle est solidifiée, caractérisé en ce qu'on forme la cavité du moule en plaçant l'empreinte de la cavité auriculaire sur un support perméable aux gaz en appliquant une feuille de matière thermoplastique ramollie à chaud sur l'empreinte et en exerçant une aspiration à travers le support perméable aux gaz pour amener la feuille ramollie à chaud à épouser la forme de l'empreinte, en laissant durcir la feuille de matière thermoplastique et en séparant l'empreinte de la feuille de matière thermoplastique sans altérer de manière permanente la forme à laquelle la feuille a été amenée afin de laisser subsister la cavité du moule dans la matière en feuille.

2. Procédé suivant la revendication 1, caractérisé en ce que la feuille de matière thermoplastique est non toxique et ne provoque pas de réaction allergique chez l'être humain.

3. Procédé suivant la revendication 1 ou 2, caractérisé en ce que la matière de moulage introduite dans la cavité laissée vide par l'empreinte est une matière plastique acrylique, un polycarbonate ou un caout-chouc de silicone.

4. Procédé suivant l'une quelconque des revendications précédentes, caractérisé en ce qu'avant d'amener la feuille de matière thermoplastique à épouser la forme de l'empreinte, on place la feuille de matière thermoplastique dans une position espacée au-dessus de l'empreinte, après quoi on applique de la chaleur à la feuille pour la ramollir à chaud et on l'abaisse ensuite sur l'empreinte de manière qu'elle en épouse la forme.

5. Procédé suivant la revendication 4, caractérisé en ce qu'on chauffe la feuille de matière thermoplastique au moyen d'un élément chauffant (25) disposé au-dessus de la feuille de matière thermoplastique.

6. Procédé suivant la revendication 4 ou 5, caractérisé en ce que la feuille de matière thermoplastique est retenue dans un cadre (19) monté de manière à permettre l'abaissement de la feuille de matière plastique sur l'empreinte.

7. Procédé suivant l'une quelconque des revendications précédentes, caractérisé en ce qu'un tube (31), destiné à raccorder l'embout auriculaire à la sortie acoustique d'une prothèse auditive lorsque l'embout et la prothèse sont utilisés en combinaison, est introduit dans la cavité du moule avant la solidification de la matière de moulage.

8. Procédé suivant l'une quelconque des revendications précédentes, suivant lequel on enlève la matière de moulage de la cavité du moule lorsqu'elle est solidifiée et on l'utilise comme une empreinte pour former une cavité de moulage dans un autre moule.

9. Embout auriculaire fabriqué par le procédé suivant l'une quelconque des revendications précédentes et suivant lequel la matière de moulage solidifiée est retenue dans la cavité du moule formée dans la feuille de matière thermoplastique.

10. Embout auriculaire fabriqué par le procédé suivant l'une quelconque des revendications 1 à 9 et suivant lequel la matière de moulage solidifiée à été retirée de la cavité de moulage.

0 026 247

Fig.2.

Fig.1.

1